# EUROPEAN PATENT APPLICATION

(11) **EP 3 933 875 A1**
(43) Date of publication of application: **05.01.2022**
(21) Application number: 20182839.9
(22) Date of filing: 29.06.2020
(51) Int. Cl.: H01H 47/00, B60L 3/04

(54) **SAFETY SWITCH CONTROLLER, POWER SUPPLY SYSTEM AND METHOD**

(71) Applicant: Vestel Elektronik Sanayi ve Ticaret A.S., 45030 Manisa (TR)
(72) Inventor: TARHAN, CENGIZ, 45030 Manisa (TR); ÖZVURAL, Görkem, 45030 Manisa (TR); USLU, Mutlu, 45030 Manisa (TR)
(74) Representative: Kehl, Ascherl, Liebhoff & Ettmayr Patentanwälte Partnerschaft mbB

(57) **Abstract**

The present invention provides a safety switch controller (100, 200, 300) for controlling an automatic input power switching device (351), that comprises switching capabilities for at least a phase (L1, L2, L3) and a neutral line (N) via an automatic switching mechanism, in a power supply system (350) with an output power switching device (352), the safety switch controller (100, 200, 300) comprising a monitor configured to monitor the output power switching device (352) for a failure, and a switching controller (104, 204, 304) electrically coupled to the automatic switching mechanism and configured to electrically activate the automatic switching mechanism if the monitor detects a failure in the output power switching device (352). Further, the present invention provides a respective power supply system (350) and a respective method.

## Description

### TECHNICAL FIELD

The invention relates to safety switch controller, a respective power supply system and a respective method.

### BACKGROUND

Although applicable to any power supply system with connectors between a charging device and a device that is to be charged, the present invention will mainly be described in conjunction with charging of electric vehicles.

Manufacturers of modern vehicles try to reduce the exhaust emissions to a minimum for example in hybrid vehicles, especially plug-in hybrid vehicles. In the case of full electric vehicles, the exhaust emissions are cancelled completely. In the following the term electric vehicle will be used when referring to any kind of vehicle that has an electric motor and a battery that may be externally charged, like in plug-in hybrid vehicles and full electric vehicles.

Electric vehicles usually comprise a battery that provides electrical energy to drive an electric motor. The battery may e.g. be charged by recuperation, i.e. by generating electrical energy with the electrical motor as generator when the vehicle is actively decelerated. Alternatively, the battery may be actively charged with an external charging system.

For safety reasons such external charging system for electrical vehicles usually comprise an internal power switch that is only closed, when a vehicle is connected to the external charging system via respective cables. The internal power switch may e.g. be a respective relay or generally a so-called contactor. Such a contactor is therefore in an open state when no vehicle is connected the external charging system and only closed when a vehicle is connected to the external charging system. The external charging system may comprise a respective control unit to this end.

An electromechanical contactor like a relay may however suffer of "sticky" or welded contacts. That means that the contacts, e.g. by means of electric arcs that may form especially during opening of the contacts, may be welded together. In such a state, the relay may not open. Therefore, the electrical contacts of the electric charging system may carry a voltage even if no vehicle is connected and the contacts of the relay are welded.

A residual current circuit breaker, RCCB, is usually provided between a mains power supply and the contactor of the external charging system to interrupt the power to the external charging system in case of any failure.

Therefore, to turn off the power supply of an external charging system in case of welded contacts in a relay, a mechanical coupling is usually provided between a respective tripping module and the RCCB. Therefore, in case welded contacts are detected in the relay, the tripping module mechanically actuates the RCCB to interrupt the power supply to the external charging system.

However, the mechanical coupling is complex and may suffer from mechanical lockups.

Accordingly, there is a need for an improved power interruption in external charging systems.

### SUMMARY OF THE INVENTION

The above stated problem is solved by the features of the independent claims. It is understood, that independent claims of a claim category may be formed in analogy to the dependent claims of another claim category.

Accordingly, it is provided:
A safety switch controller for controlling an automatic input power switching device, that comprises switching capabilities for at least a phase and a neutral line via an automatic switching mechanism, in a power supply system with an output power switching device, the safety switch controller comprising a monitor configured to monitor the output power switching device for a failure, and a switching controller electrically coupled to the automatic switching mechanism and configured to electrically activate the automatic switching mechanism if the monitor detects a failure in the output power switching device.

Further, it is provided:
A power supply system comprising an automatic input power switching device that is couplable to a mains power supply and comprises an automatic switching mechanism with switching capabilities for at least a phase and a neutral line, an output power switching device that is coupled electrically between the automatic input power switching device and a power output connector of the power supply system, and a safety switch controller according to the present invention, that is arranged electrically in parallel to the automatic input power switching device.

Further, it is provided:
A method for operating an automatic input power switching device, that comprises switching capabilities for at least a phase and a neutral line via an automatic switching mechanism, in a power supply system with an output power switching device, the method comprising monitoring the output power switching device for a failure, and electrically activating the automatic switching mechanism if the monitor detects a failure in the output power switching device.

The present invention is based on the finding that mechanically tripping or switching an automatic input power switching device, like e.g. a RCCB, in a charging system for electrical vehicles is not the most reliable scheme for turning off the power supply to the charging connectors of the charging system.

The present invention is further based on the fact that an automatic input power switching device has inherent or automatic switching capabilities that may be activated. In this regard, "activate" refers to activation of the automatic input power switching device to interrupt the power supply to the power supply system.

Usually such automatic input power switching devices monitor the current that flows into the system via one or more phases versus the current that flows out of the system via one or more phases and/or the neutral line. If such an automatic input power switching device detects a difference between the two monitored currents that is above a specified threshold value, the automatic input power switching device will interrupt the power supply.

The present invention therefore provides the safety switch controller for controlling the automatic input power switching device of a power supply system. In this context a vehicle charging system may be such a power supply system, since the vehicle charging system supplies the vehicle, i.e. the battery, with electrical energy.

The safety switch controller instead of performing a mechanical actuation of the automatic input power switching device performs an electric actuation of the automatic input power switching device, i.e. of its respective automatic switching mechanism. It is understood, that due to the lack of moving mechanical parts an electric actuation is more reliably than a mechanical actuation.

In order to perform an electric control of the automatic input power switching device, the safety switch controller comprises the switching controller. The switching controller is electrically coupled to the automatic switching mechanism in the automatic input power switching device.

The automatic input power switching device may e.g. monitor with the automatic switching mechanism the incoming and outgoing electrical current or currents on different power lines, like e.g. phase lines and neutral lines. Therefore, the switching controller may be electrically coupled to the automatic switching mechanism such that it may trigger the monitoring in the automatic switching mechanism to interrupt the power flow through the automatic input power switching device.

The safety switch controller further comprises the monitor that monitors the output power switching device in the power supply system. It is understood, that the output power switching device may be a device that turns off power at the electrical output contacts of the power supply system. Such an output power switching device may e.g. fail due to welded internal contacts and therefore may fail in turning off power at the electrical output contacts. This may be monitored by the monitor and a respective information may be provided to the switching controller that allows the switching controller to decide whether to actuate the automatic input power switching device or not.

The safety switch controller of the present invention therefore provides a purely electrical control for an automatic input power switching device in a power supply system. Further, the safety switch controller with the ability to electrically control an automatic input power switching device may be easily adapted to different types of automatic input power switching devices in power supply systems and may easily be retrofitted in power supply systems.

Further embodiments of the present invention are subject of the further dependent claims and of the following description, referring to the drawings.

In an embodiment, the switching controller for activating the automatic switching mechanism of the automatic input power switching device may be configured to provide an electrical connection between a phase output of the automatic input power switching device and a neutral input of the automatic input power switching device.

The automatic input power switching device in the power supply system may be provided as a so called RCCB or residual current circuit breaker. Such RCCBs, as explained above, usually monitor the current flowing into a system, e.g. via the phase lines, and the current flowing out of a system, e.g. via the neutral line. Such an automatic input power switching device will interrupt the current flow if the difference between the power flowing into the system and the current flowing out of a system is larger than a predetermined threshold.

The switching controller provides an electrical connection between a phase output of the automatic input power switching device and a neutral input of the automatic input power switching device. In this context the term phase output refers to an output from the automatic input power switching device to the output power switching device, i.e. into the power supply system. The term neutral input in contrast refers to a connection of the automatic input power switching device to the mains power system. Therefore, regarding the automatic input power switching device inputs refer to connections to the mains power system and outputs refer to connections to/in the power supply system.

By providing an electrical connection between a phase output of the automatic input power switching device and a neutral input of the automatic input power switching device a current path is created that allows current to flow around the automatic input power switching device. Therefore, the current that flows into the power supply system will be larger than the current that is measured in the automatic input power switching device as flowing out of the power supply system. The automatic switching mechanism of a RCCB will therefore be triggered and current flow will be interrupted.

This solution allows using the safety switch controller with off the shelf RCCBs easily.

In another embodiment, the switching controller may be configured to control electrical properties of the electrical connection between the phase output of the automatic input power switching device and the neutral input of the automatic input power switching device.

The switching controller may provide the electrical connection with specific electrical properties, for example regarding resistance and inductivity or maximum current.

The switching controller may for example control the maximum current through the electrical connection to be equal to or larger than the tripping current of the automatic input power switching device. It is understood, that the current through the electrical connection as property is only an example and that other properties may also be controlled.

In a further embodiment, the switching controller may comprise a connection control circuit that comprises a series arrangement of a switching element and a current limiter in the electrical connection, wherein the current limiter may be configured to limit the current through the electrical connection, and the switching element may be controllable based on the output of the monitor.

A series arrangement of a switching element and a current limiter is a very simple arrangement that may effectively provide the electrical connection around the automatic input power switching device.

It is understood, that in an embodiment, the switching element may e.g. be electrically coupled to the monitor to receive a respective signal from the monitor.

In a further embodiment, the monitor may e.g. output a discrete on-off signal, where one state, e.g. on, indicates a failure in the output power switching device. The output of the monitor may be coupled to a control input of the switching element. The electrical connection that is to be established therefore runs via the power input and the power output of the switching element.

It is understood, that the above explanation refers to a possible embodiment, and that other arrangements are possible. For example, the logic of the control signal may be different in that an off state may indicate a failure. Further, it is understood, that electronically a positive or negative logic may be used to indicate the off/on states.

It is understood, that any other data interface, e.g. a digital data bus or digital discrete data lines may be used to communication the monitor with the switching element. In another embodiment, at least part of the monitor and at least part of the control unit for switching element may be provided as computer program product or computer readable instructions. In such a case, the interface may be provided via variables or functions or the like.

In another embodiment, the current limiter may comprise a series resistor in the electrical connection, or a current source, especially a constant current source, that limits the current through the electrical connection. As alternative or in addition, the switching element may comprise a relay, especially a solid-state relay, or a semiconductor switch.

The current limiter as may be seen above, in an embodiment is a passive current limiter that comprises a series resistor. It is understood, that the series resistor may be dimensioned based on the nominal voltage in the power supply system such that the current through the electrical connection is limited to a predetermined value, for example a specific value or range between 30mA and 100mA or the like. If instead, a current source is used, the current through the electrical connection may be limit independently of the nominal voltage.

Further, it is understood, that the switching element may be controlled by a specific control unit. Therefore, e.g. the timing of establishing the electrical connection may be controlled in detail. For example, a delay may be implemented for establishing the electrical connection. Further, other external inputs from the power supply system may be evaluated in any combination as an additional variable for establishing the electrical connection. Such inputs may e.g. be evaluated via an "AND" or an "OR" combination with the signal from the monitor.

In another embodiment, the monitor may be coupled to at least one electrical output of the output power switching device and may be configured to monitor if a voltage is present at the monitored at least one electrical output and to detect a failure if voltage is present at the monitored at least one electrical output when the output power switching device is controlled to switch-off the voltage at the monitored at least one electrical output.

As explained above, it is important to accurately turn of electrical power in a power supply system when required, especially if external contacts are present e.g. via a connector.

The monitor in an embodiment may therefore monitor the control state of the output power switching device and the presence of voltage at the electrical outputs of the output power switching device. This allows the monitor to determine if the presence or absence of voltage at the electrical outputs matches the control state of the output power switching device. It is understood, that the monitor may also receive the control signal that is provided to the output power switching device to this end.

### BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments which are specified in the schematic figures of the drawings, in which:
- Fig. 1: shows a block diagram of a possible embodiment of a safety switch controller according to the present invention;
- Fig. 2: shows a block diagram of a possible embodiment of a safety switch controller according to the present invention;
- Fig. 3: shows a block diagram of a possible embodiment of a power supply system according to the present invention;
- Fig. 4: shows a flow diagram of a possible embodiment of a method according to the present invention; and
- Fig. 5: shows a block diagram of an exemplary power supply system.

In the figures like reference signs denote like elements unless stated otherwise.

### DETAILED DESCRIPTION OF THE DRAWINGS

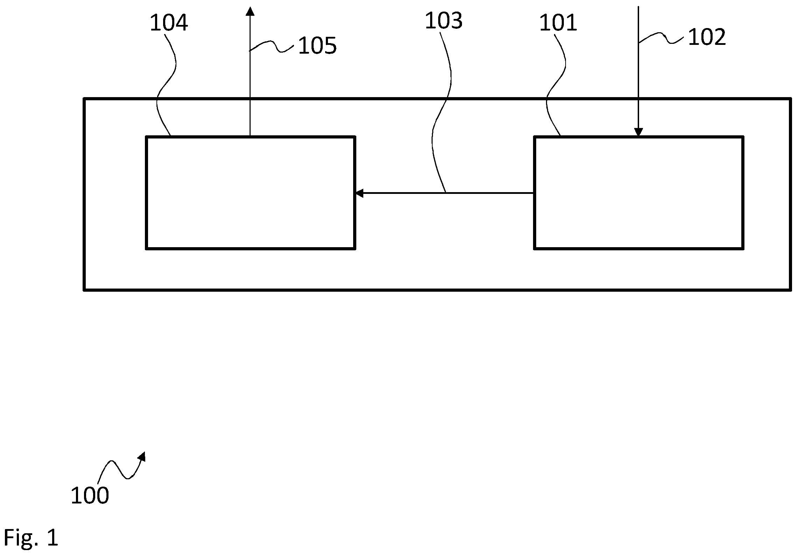

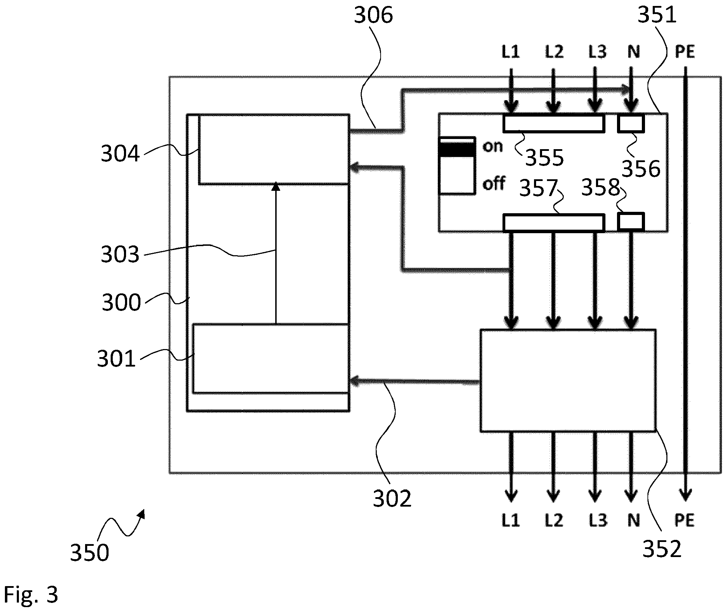

Fig. 1 shows a block diagram of a safety switch controller 100. The safety switch controller 100 comprises a monitor 101 and a switching controller 104 that is coupled to the monitor 101. The safety switch controller 100 is provided to operate in conjunction with a power supply system that comprises an automatic input power switching device with switching capabilities for at least a phase and a neutral line via an automatic switching mechanism, and an output power switching device, see Fig. 3 for more details.

The monitor 101 monitors the output power switching device of the power supply system e.g. via a respective monitoring signal 102. The monitoring signal 102 may be a voltage that is measured at an output of the output power switching device. This allows comparing the presence of voltage at an output of the output power switching device with the control state of the output power switching device. It is understood, that although not explicitly shown, the monitor 101 may also receive information about the control state of the output power switching device.

If the control state and the presence of voltage deviate, if for example the control state indicates that the output power switching device should be turned off and at the same time voltage is present at the output of the output power switching device, the monitor 101 may detect a failure and provide a respective failure signal 103 to the switching controller 104.

It is understood, that the monitor 101 may be implemented as any kind of hardware, computer program product or combination of hardware and computer program product. For example, at least some or all functions of the monitor 101 may be implemented as hardware circuit, for example as a comparator for detecting voltage at the output of the output power switching device that provides a respective failure signal 103 to the switching controller 104. As alternative, at least some functions may be provided as computer program products, for example an A/D converter may be used to determine a voltage at an output of the output power switching device and the determined value may be compared by a computer program product that is executed by a controller. Other exemplary embodiments are also possible.

The switching controller 104 is in operation electrically coupled to the automatic switching mechanism and may therefore electrically activate the automatic switching mechanism if the monitor 101 detects a failure in the output power switching device. To this end, the switching controller 104 may provide the switching signal 105 to the automatic switching mechanism.

The switching controller 104 may also be provided as any kind of hardware, computer program product or combination of hardware and computer program product. For example, at least some or all functions of the switching controller 104 may be implemented as hardware circuit. For example, the switching controller 104 may be provided as hardware circuit that receives the failure signal 103 from the monitor 101 and e.g. drives a switch with the failure signal to electrically activate the automatic switching mechanism. As alternative, at least some functions of the switching controller 104 may be performed by a combination of a controller with respective computer program instructions.

With the arrangement of the safety switch controller 100 it is possible to electrically control an automatic input power switching device, like e.g. a RCCB, as usually used in power supply systems for charging electrical vehicles.

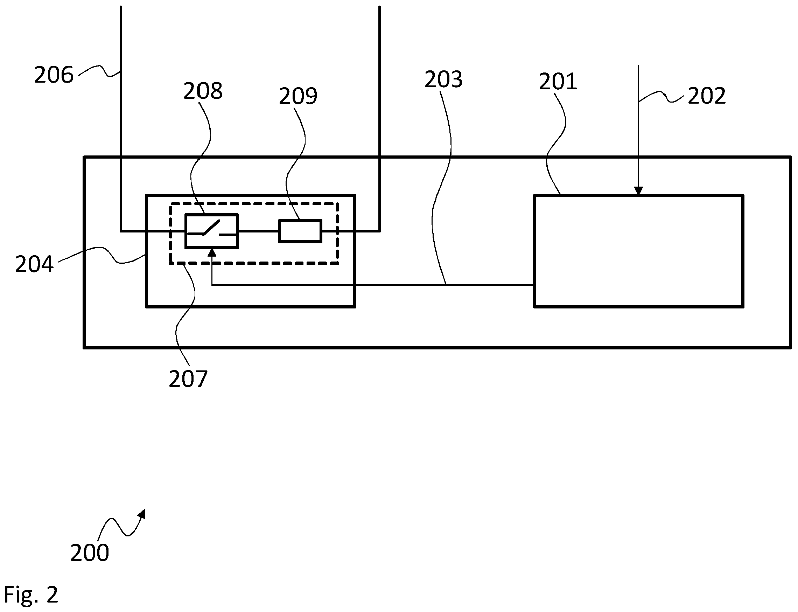

Fig. 2 shows a block diagram of a safety switch controller 200. The safety switch controller 200 is based on the safety switch controller 100. Therefore, the safety switch controller 200 comprises a monitor 201 and a switching controller 204 that is coupled to the monitor 201.

In the safety switch controller 200, the switching controller 204 comprises a connection control circuit 207. The connection control circuit 207 further comprises a series arrangement of a switching element 208 and a current limiter 209, in this case a resistor 209. Further, the switching controller 204 comprises two lines to provide an electrical connection 206 via the series arrangement. The electrical connection 206 may for example be provided to trip an integrated safety mechanism of a RCCB, as will be shown below in conjunction with Fig. 3.

The current limiter 209 serves to limit the current through the electrical connection 206. To this end, in case of a resistance 209 as current limiter 209 the value of the resistance may be calculated based on the nominal voltage in the power supply system.

The switching element 208 in the safety switch controller 200 is controlled based on the output of the monitor 201, i.e. the failure signal 203. When the switching element 208 is closed, the electrical connection 206 is closed or created.

If for example a RCCB is used in the power supply system as automatic input power switching device, the switching controller 204 may e.g. close the electrical connections 206 between a phase output of the automatic input power switching device and a neutral input of the automatic input power switching device. This will automatically trip the RCCBs switching mechanism.

Fig. 3 shows a block diagram of a possible embodiment of a power supply system 350. The power supply system 350 comprises an automatic input power switching device 351 that may be coupled to a mains power supply and that comprises an automatic switching mechanism (not separately shown) with switching capabilities for at least a phase L1, L2, L3 and a neutral line N. The power supply system 350 further comprises an output power switching device 352 that is coupled electrically between the automatic input power switching device 351 and a power output connector 352 of the power supply system 350. In addition, the power supply system 350 comprises safety switch controller 300 according to the present invention, that is arranged electrically in parallel to the automatic input power switching device 351.

The automatic input power switching device 351 may e.g. be a RCCB. The automatic input power switching device 351 comprises a phase input 355 and a neutral input 356. The phase input 355 is coupled to the three phase lines L1, L2, L3 of the mains power supply. The neutral input 356 is coupled to the neutral line of the mains power supply.

The automatic input power switching device 351 further comprises a phase output 357 and a neutral output 358. The phase output 357 forwards the three power lines L1, L2, L3 to the output power switching device 352. The neutral output 258 forwards the neutral line N to the output power switching device 352.

The monitor 301 provided in the safety switch controller 300 monitors the output power switching device 352 for any failure and provides a respective failure signal 303 to the switching controller 304. As can be seen, the switching controller 304 may provide an electrical connection 306 between the phase line L1 of the phase output 357 and the neutral line L at the neutral input 356, therefore bridging the automatic input power switching device 351.

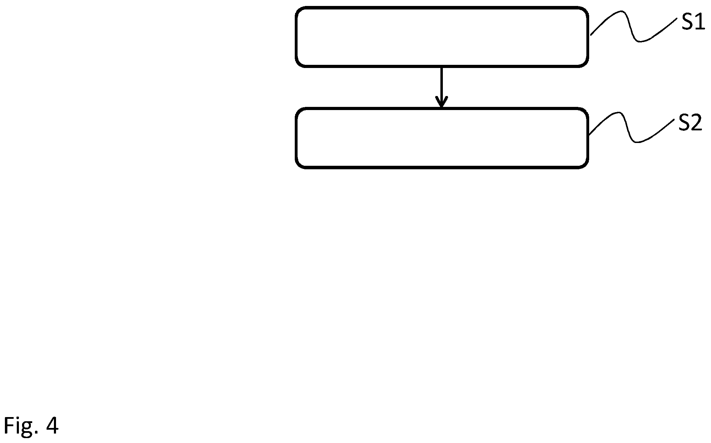

For sake of clarity in the following description of the method-based Fig. 4 the reference signs used above in the description of apparatus-based Figs. 1 - 3 will be maintained.

Fig. 4 shows a method for operating an automatic input power switching device 351, that comprises switching capabilities for at least a phase L1, L2, L3 and a neutral line N via an automatic switching mechanism, in a power supply system 350 with an output power switching device 352.

The method comprises monitoring the output power switching device for a failure, and electrically activating the automatic switching mechanism if during monitoring a failure in the output power switching device is detected.

In an embodiment, for activating the automatic switching mechanism of the automatic input power switching device an electrical connection between a phase output of the automatic input power switching device and a neutral input of the automatic input power switching device may be provided. Other methods of activating the automatic input power switching device may also be employed.

The method may also comprise controlling electrical properties of the electrical connection between the phase output of the automatic input power switching device and the neutral input of the automatic input power switching device, especially regarding e.g. power, voltage, current, timing and the like.

In an embodiment, controlling electrical properties is performed with a connection control circuit that comprises a series arrangement of a switching element and a current limiter in the electrical connection, wherein the current limiter limits the current through the electrical connection, and the switching element is controlled based on the result of the monitoring.

The current limiter may for example limit the current with a series resistor in the electrical connection, or a current source, especially a constant current source, that limits the current through the electrical connection. The switching element may e.g. provide the electrical connection with a relay, especially a solid-state relay, or a semiconductor switch.

In an embodiment monitoring S2 may comprise monitoring if a voltage is present at the monitored at least one electrical output and a failure is detected if voltage is present at the monitored at least one electrical output when the output power switching device is controlled to switch-off the voltage at the monitored at least one electrical output.

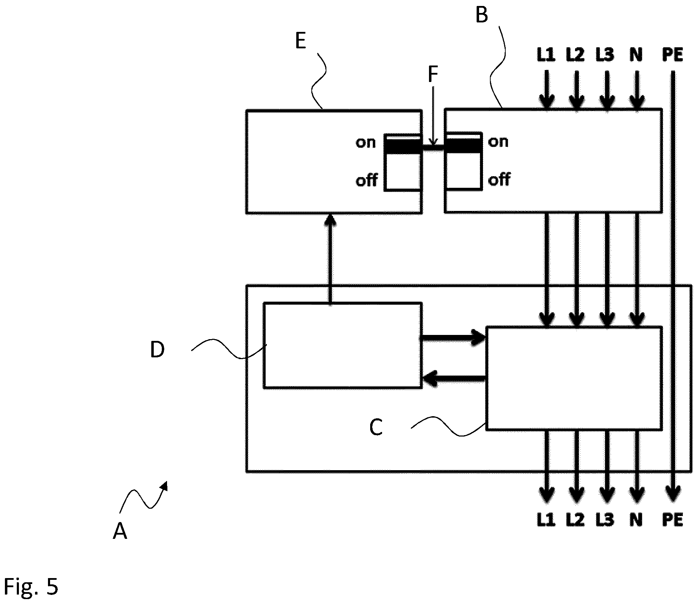

Fig. 5 shows a block diagram of an exemplary power supply system A. The power supply system A comprises a RCCB B that is connected to a mains supply on the input side and to a switch C on the output side. The switch C is monitored with the controller D that determined if a failure is present in switch C or not. If a failure is present, the controller D provides a respective signal to tripping controller E.

The tripping controller E is mechanically coupled via mechanical coupling F to the RCCB B.

It is obvious, that in such an arrangement, the mechanical actuation of the TCCB B is more error prone than the electric actuation according to the present invention.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

### List of reference signs

- 100, 200, 300: safety switch controller
- 101, 201, 301: monitor
- 102, 302: monitoring signal
- 103, 303: failure signal
- 104, 204, 304: switching controller
- 105: switching signal
- 206, 306: electrical connection
- 207: connection control circuit
- 208: switching element
- 209: current limiter
- 350: power supply system
- 351: automatic input power switching device
- 352: output power switching device
- 355: phase input
- 356: neutral input
- 357: phase output
- 358: neutral output
- L1, L2, L3: phase
- N: neutral line
- PE: protective earth line
- S1, S2: method step
- A: supply system
- B: RCCB
- C: switch
- D: controller
- E: tripping controller
- F: mechanical coupling

## Claims

1. Safety switch controller (100, 200, 300) for controlling an automatic input power switching device (351), that comprises switching capabilities for at least a phase (L1, L2, L3) and a neutral line (N) via an automatic switching mechanism, in a power supply system (350) with an output power switching device (352), the safety switch controller (100, 200, 300) comprising:
a monitor (101, 201, 301) configured to monitor the output power switching device (352) for a failure, and
a switching controller (104, 204, 304) electrically coupled to the automatic switching mechanism and configured to electrically activate the automatic switching mechanism if the monitor (101, 201, 301) detects a failure in the output power switching device (352).

2. Safety switch controller (100, 200, 300) according to claim 1, wherein the switching controller (104, 204, 304) for activating the automatic switching mechanism of the automatic input power switching device (351) is configured to provide an electrical connection (206, 306) between a phase output (357) of the automatic input power switching device (351) and a neutral input (356) of the automatic input power switching device (351).

3. Safety switch controller (100, 200, 300) according to claim 2, wherein the switching controller (104, 204, 304) is configured to control electrical properties of the electrical connection (206, 306) between the phase output (357) of the automatic input power switching device (351) and the neutral input (356) of the automatic input power switching device (351).

4. Safety switch controller (100, 200, 300) according to any one of claims 2 and 3, wherein the switching controller (104, 204, 304) comprises a connection control circuit (207) that comprises a series arrangement of a switching element (208) and a current limiter (209) in the electrical connection (206, 306), wherein the current limiter (209) is configured to limit the current through the electrical connection (206, 306), and the switching element (208) is controllable based on the output of the monitor (101, 201, 301).

5. Safety switch controller (100, 200, 300) according to claim 4, wherein the current limiter (209) comprises a series resistor in the electrical connection (206, 306), or a current source, especially a constant current source, that limits the current through the electrical connection (206, 306); and/or
wherein the switching element (208) comprises a relay, especially a solid-state relay, or a semiconductor switch.

6. Safety switch controller (100, 200, 300) according to any one of the preceding claims, wherein the monitor (101, 201, 301) is coupled to at least one electrical output of the output power switching device (352) and is configured to monitor if a voltage is present at the monitored at least one electrical output and to detect a failure if voltage is present at the monitored at least one electrical output when the output power switching device (352) is controlled to switch-off the voltage at the monitored at least one electrical output.

7. Power supply system (350) comprising:
an automatic input power switching device (351) that is couplable to a mains power supply and comprises an automatic switching mechanism with switching capabilities for at least a phase (L1, L2, L3) and a neutral line (N),
an output power switching device (352) that is coupled electrically between the automatic input power switching device (351) and a power output connector of the power supply system (350), and
a safety switch controller (100, 200, 300) according to any of the preceding claims, that is arranged electrically in parallel to the automatic input power switching device (351).

8. Method for operating an automatic input power switching device (351), that comprises switching capabilities for at least a phase (L1, L2, L3) and a neutral line (N) via an automatic switching mechanism, in a power supply system (350) with an output power switching device (352), the method comprising:
monitoring (S1) the output power switching device (352) for a failure, and
electrically activating (S2) the automatic switching mechanism if during monitoring a failure in the output power switching device (352) is detected.

9. Method according to claim 8, wherein for activating the automatic switching mechanism of the automatic input power switching device (351) an electrical connection (206, 306) between a phase output (357) of the automatic input power switching device (351) and a neutral input (356) of the automatic input power switching device (351) is provided.

10. Method according to claim 9, comprising controlling electrical properties of the electrical connection (206, 306) between the phase output (357) of the automatic input power switching device (351) and the neutral input (356) of the automatic input power switching device (351).

11. Method according to any one of claims 8 and 9, wherein controlling electrical properties is performed with a connection control circuit (207) that comprises a series arrangement of a switching element (208) and a current limiter (209) in the electrical connection (206, 306), wherein the current limiter (209) limits the current through the electrical connection (206, 306), and the switching element (208) is controlled based on the result of the monitoring.

12. Method according to claim 11, wherein the current limiter (209) limits the current with a series resistor in the electrical connection (206, 306), or a current source, especially a constant current source, that limits the current through the electrical connection (206, 306); and/or
wherein the switching element (208) provides the electrical connection (206, 306) with a relay, especially a solid-state relay, or a semiconductor switch.

13. Method according to any one of the preceding method-related claims, wherein monitoring comprises monitoring if a voltage is present at the monitored at least one electrical output and a failure is detected if voltage is present at the monitored at least one electrical output when the output power switching device (352) is controlled to switch-off the voltage at the monitored at least one electrical output.
